(19)

Europäisches
Patentamt
European
Patent Office
Office européen
des brevets

(11) **EP 2 154 115 A1**

(12) **EUROPEAN PATENT APPLICATION**

(43) Date of publication:
**17.02.2010 Bulletin 2010/07**

(21) Application number: **09009411.1**

(22) Date of filing: **20.07.2009**

(51) Int Cl.:
*C02F 3/12* (2006.01)        *C02F 3/30* (2006.01)
*C02F 9/00* (2006.01)        *C02F 11/12* (2006.01)
*C02F 1/52* (2006.01)        *C02F 103/00* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **21.07.2008 HU 0800452**

(71) Applicant: **Kelet-magyarországi Vállalkozási
Épitöipari és Kereskedelmi Kft.
Széchenyi u. 46
4025 Debrecen (HU)**

(72) Inventors:
• **Benedekfy, Vilmos
3300 Eger (HU)**
• **Demeter, István
3300 Eger (HU)**
• **Darvai, István
3324 Felsötarkány (HU)**

(74) Representative: **Emri, Jozsefné
Emri-Patent Ltd.,
Kartacs u. 36.
4032 Debrecen (HU)**

(54) **Flexible sub-elements for biological sewage treatment plant**

(57) The subject of the invention is a highly flexible biological sewage treatment plant subassembly family, comprising subassembly elements installed in one or more large structure(s) having a circular ground plan or two opposite curved walls (1); the subassembly elements house the main, volume-intensive biological treatment and other units of the biological sewage treatment plant: the selector reactor (3), the anaerobic reactor (4), the anoxic reactor (5), the aerobic reactor (6), the post-sedimentation (7), the sterilization (8), the sludge thickening (9) and the liquid municipal waste pre-treatment (10) units, as well as the recirculating system(s), wherein in the inner space of at least one large structure there is at least one circular ring, and at least one circular ring is divided by dividing walls (2); the subassembly elements are installed in the circular ring and the central space surrounded by the circular ring, and the large structures and the subassembly elements are connected in series with the commonly used fittings, and thus they form one technological line, irrespectively of the operating subassemblies and the number of large structures.

Figure 1

EP 2 154 115 A1

**Description**

The subject of the invention is a highly flexible biological sewage treatment plant subassembly family in the capacity range of 500 - 100 000 LE, comprising subassembly elements installed in one or more large structure(s) having a circular ground plan or two opposite curved walls. The plant subassembly family can be used advantageously especially for the implementation of municipal sewage treatment plants with a low initial load and/or to be constructed in multiple phases, or for the treatment of the sewage of areas characterized by large periodic load fluctuations.

For example publication document No. P8504998 discloses a plant suitable for the multi-step activated sludge treatment of community sewage. The plant has at least two ponds connected in series, forming a closed reactor, and connected to each other by means of a through-opening. No. P8504998 describes a block-system sewage treatment plant suitable for a given capacity.

The essence of the plant according to publication document No. P9803213 is that the mechanical pre-treatment unit, the pre- and/or post-sedimentation unit(s), the activated sludge pond, the sterilization unit, as well as any auxiliary units - as necessary - are all incorporated in a single structure having a rectangular or substantially rectangular top view, as a treatment subassembly.

Several sewage treatment plants are know from the literature (GB 2164641, DE 3919368, DE 4207077, DE 4444335, HU 208656), however the need for a flexible plant with multiple capacity steps is not even raised.

The aim of the invention was to provide a simple and economical to implement biological sewage treatment plant subassembly family, which can be operated in multiple capacity steps even in the event of single-phase construction, and operates in any construction phase in any capacity step with one technological line.

The set aim was achieved by the development of a highly flexible biological sewage treatment plant subassembly family.

The sewage treatment plant subassembly family according to the invention comprises subassembly elements installed in one or more large structure(s) having a circular ground plan or two opposite curved walls, all connected in series with the commonly used fittings, and thus they form one technological line, irrespectively of the operating subassemblies and the number of large structures. The subassembly elements house the volume-intensive biological treatment and other units of the biological sewage treatment plant: the selector reactor, the anaerobic reactor, the anoxic reactor, the aerobic reactor, the post-sedimentation, the sterilization, the sludge thickening and the liquid municipal waste (l.m.w.) pre-treatment units, as well as the recirculating system(s).

In the inner space of the large structure - if it is not a post-sedimentation unit built as a separate structure - there is at least one circular ring, which is undivided, or divided by a dividing wall/dividing walls. The subassembly elements are installed in the circular ring and in the central space surrounded by the circular ring, as necessary. The position of the dividing walls is changeable, depending on the required capacity of the plant, and the volume-intensity of the individual subprocesses in time.

The plant subassembly family according to the invention is suitable for a municipal sewage treatment capacity range of 500 LE to 100,000 LE.

Depending on the extent of the load and the capacity demands, the plant subassembly family can be installed in one or more large structures, with different layouts. The subassembly elements to be installed in the circular rings are interchangeable, expandable or omissible.

The operating principle that the system forms one technological line, and not two or more plants operating in parallel, prevails for more than one large structures as well, as in the event of the construction of a facility in two or more phases, or its expansion, the new large structures are built between the existing ones, connected to them is series.

The high flexibility, variability of the plant subassembly family and the ease of operation of the in every case single technological line make it suitable for solving the following tasks, and for safe operation under the following conditions:

- a treatment works treating initially only or mainly liquid municipal waste - but built for a significantly higher load than the actual initial load,
- a treatment works for a sewer system implemented with a sewer network constructed in multiple phases,
- a sewage treatment works for municipalities with sewers that are initially perhaps for years characterized by a low level of conveniences,
- a treatment works for sewer systems operating with large seasonal fluctuations - resort areas, etc.

The plant subassembly family according to the invention can be operated safely as the sewage treatment works of any municipality, if its following two special properties are exploited:

on the one hand the high flexibility, which makes the performance of maintenance and other work as well extremely easy, as the individual units can be simply put into - or taken out of - service, while the treatment of sewage is uninterrupted, perhaps with a small temporary decrease in efficiency;
on the other hand the advantage that is due to the fact that even in the event of multiphase construction one plant is operated - and not several in parallel.

A general solution for a municipal sewage treatment works is disclosed below, using the plant subassembly family according to the invention.

Given the technological calculation for a municipal sewage treatment plant;
the treatment works is designed as an anaerobic + anoxic + aerobic combination - where the subassembly elements to be installed in a large structure(s) forming the subject of the patent application are:
a selector reactor + an anaerobic reactor + an anoxic reactor + an aerobic reactor, as well as a post-sedimentation unit, a sterilization unit, a sludge thickening unit, and a sludge recirculating pump well;
taking the sum of the calculated volumes of the selector reactor + anaerobic reactor + anoxic reactor + aerobic reactor subassembly elements, or the times of stay therein as $x^*$ - according to the calculation the individual subassembly elements can be characterized e.g. by the following ratios:

| | |
|---|---|
| selector reactor: | $0.032\ x^*$ |
| anaerobic reactor: | $0.063\ x^*$ |
| anoxic reactor: | $0.260\ x^*$ |
| aerobic reactor(s): | $\underline{0.645\ x^*}$ |
| total: | $\underline{x^*}$ |

from the above subassembly elements the spaces equipped with a liquid mixer are: the selector reactor, the anaerobic reactor and the anoxic reactor;
any of these reactors, or e.g. two of them jointly, can be operated both as an anaerobic or an anoxic reactor - if the recirculating systems are implemented accordingly;
the aerobic reactor, which can be characterized as a tubular reactor, can be divided into any number of subreactors connected in series;
the anaerobic or anoxic reactors can also be divided, but such a division is rarely necessary;
the post-sedimentation unit can be operated at different operating depths;
if the plant is operated at a low capacity, the post-sedimentation unit also operates at a low sewage depth - while at higher loads at an increased depth;
the pumps of the recirculating systems are equipped with a frequency regulator - and/or designed for max. 4 operating machines;
any of the sewage recirculating pumps can be simply relocated.

Some further concrete embodiments of our invention are shown in detail in the following figures:

| | | |
|---|---|---|
| Figure 1 | | A schematic top view of the plant subassembly family installed in one large structure with one circular ring |
| Figure 1a | | capacity step I: $Q_{max}$ l.m.w. |
| Figure 1b | | capacity step II: $0.2\ Q_{max}$ sw. + $Q_{II}$ l.m.w. |
| Figure 1c | | capacity step III: $0.4\ Q_{max}$ sw. + $Q_{III}$ l.m.w. |
| Figure 1d | | capacity step IV: $Q_{max}$ sw. + $Q_{min}$ l.m.w. |
| Figure 2 | | A schematic top view of the plant subassembly family installed in one large structure with two circular rings |
| Figure 2a | | capacity step I: $Q_{max}$ l.m.w. |
| Figure 2b | | capacity step II: $0.2\ Q_{max}$ sw. + Qn l.m.w. |
| Figure 2c | | capacity step III: $0.4\ Q_{max}$ sw. + $Q_{III}$ l.m.w. |
| Figure 2d | | capacity step IV: $Q_{max}$ sw. + $Q_{min}$ l.m.w. |
| Figure 3 | | A schematic top view of the plant subassembly family installed in two large structures |
| Figure 3a | | capacity step I: $Q_{max}$ l.m.w. |
| Figure 3b | | capacity step II: $0.2\ Q_{max}$ sw. + $Q_{II}$ l.m.w. |
| Figure 3c | | capacity step III: $0.4\ Q_{max}$ sw. + $Q_{III}$ l.m.w. |
| Figure 3d | | capacity step IV: $Q_{max}$ sw. + $Q_{min}$ l.m.w. |
| Figure 4 | | A schematic top view of the plant subassembly family installed in three large structures |
| Figure 4a | | capacity step I: $Q_{max}$ l.m.w. |
| Figure 4b | | capacity step II: $0.2\ Q_{max}$ sw. + $Q_{II}$ l.m.w. |
| Figure 4c | | capacity step III: $0.4\ Q_{max}$ sw. + $Q_{III}$ l.m.w. |
| Figure 4d | | capacity step IV: $Q_{max}$ sw. + $Q_{min}$ l.m.w. |

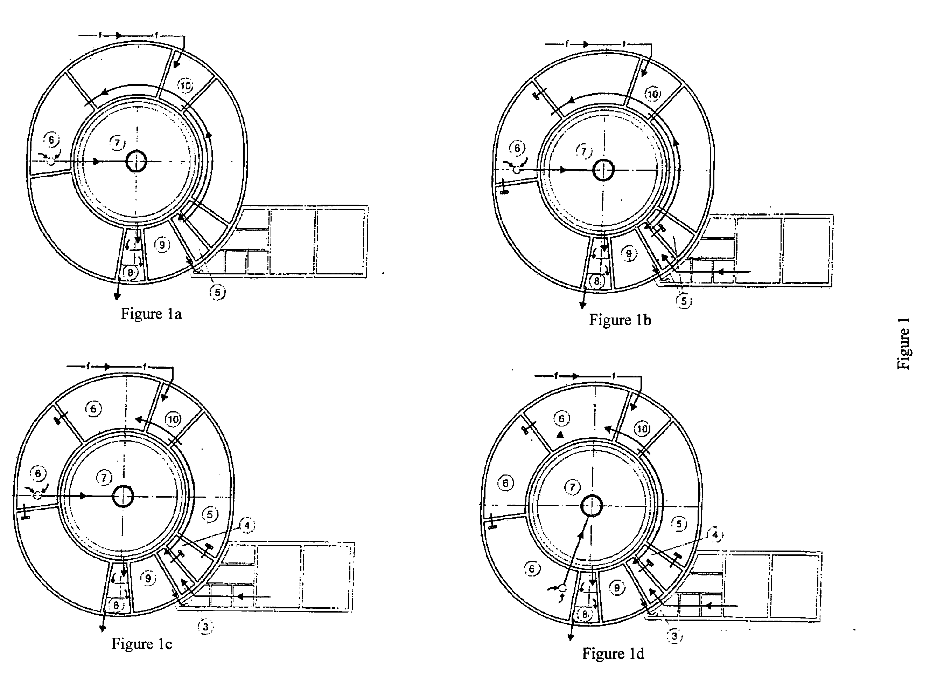

Figures 1-4 show the plant subassemblies with 4 different layouts.

Figure 1 shows a schematic top view of the plant subassembly family installed in one large structure, where the large structure has one circular ring. The post-sedimentation unit 7 is installed in the central space surrounded by the circular ring, while the selector reactor 3, the anaerobic reactor 4, the anoxic reactor 5, the aerobic reactor 6, the sterilization unit 8, the sludge thickening unit 9 and the l.m.w. pre-treatment unit 10 are installed in the circular ring divided by dividing walls 2.

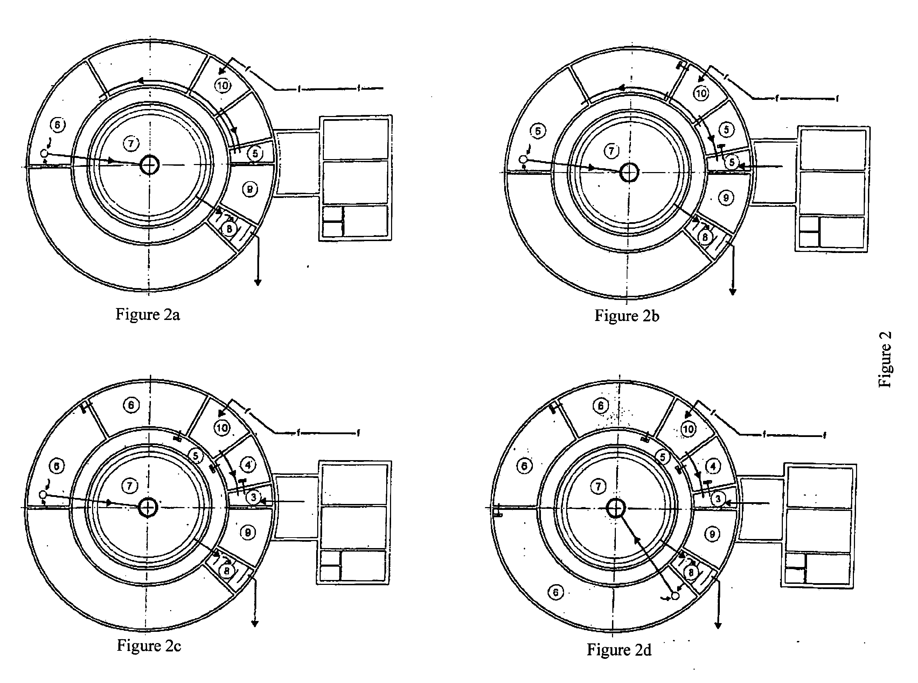

Figure 2 shows a schematic top view of the plant subassembly family installed in one large structure, where the large structure has two circular rings. The post-sedimentation unit 7 is installed in the central space surrounded by the inner circular ring, the anoxic reactor 5 is installed in the inner circular ring, while the selector reactor 3, the anaerobic reactor 4, the aerobic reactor 6, the sterilization unit 8, the sludge thickening unit 9 and the l.m.w. pre-treatment unit 10 are installed in the outer circular ring divided by dividing walls 2.

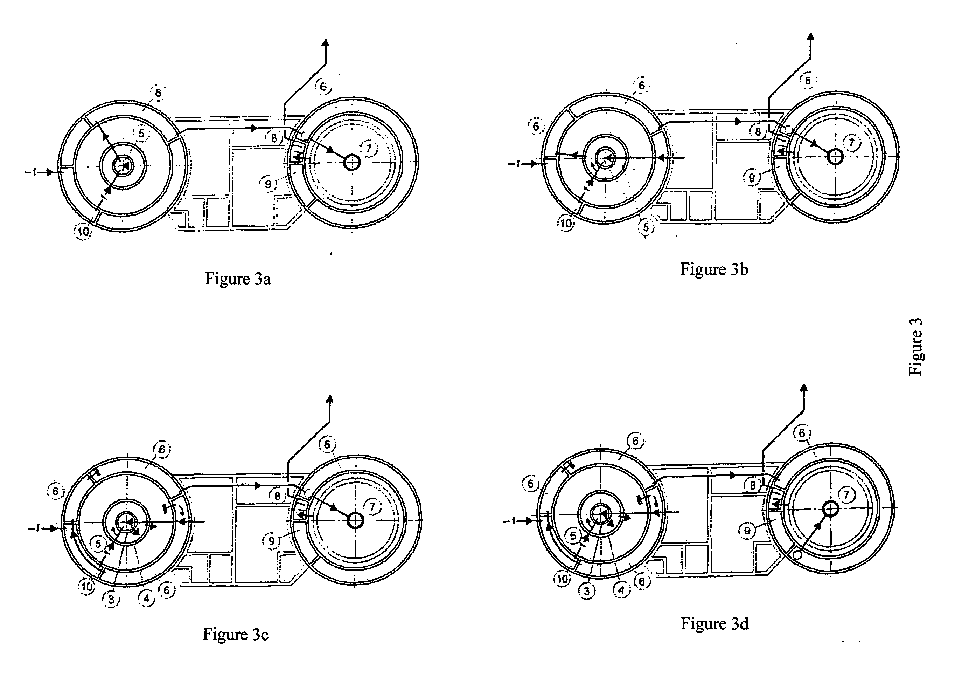

Figure 3 shows a schematic top view of the plant subassembly family installed in two large structures, where one of the large structures has one circular ring, the post-sedimentation unit 7 is installed in the central space surrounded by the circular ring, while the aerobic reactor 6, the sterilization unit 8 and the sludge thickening unit 9 are installed in the circular ring divided by dividing walls 2. The other large structure has three circular rings, the selector reactor 3 is installed in the central space surrounded by the inner circular ring, the anaerobic reactor 4 is installed in the inner circular ring, the anoxic reactor 5 is installed in the central circular ring, while the aerobic reactor 6 and the l.m.w. pre-treatment unit 10 are installed in the outer circular ring divided by dividing walls 2.

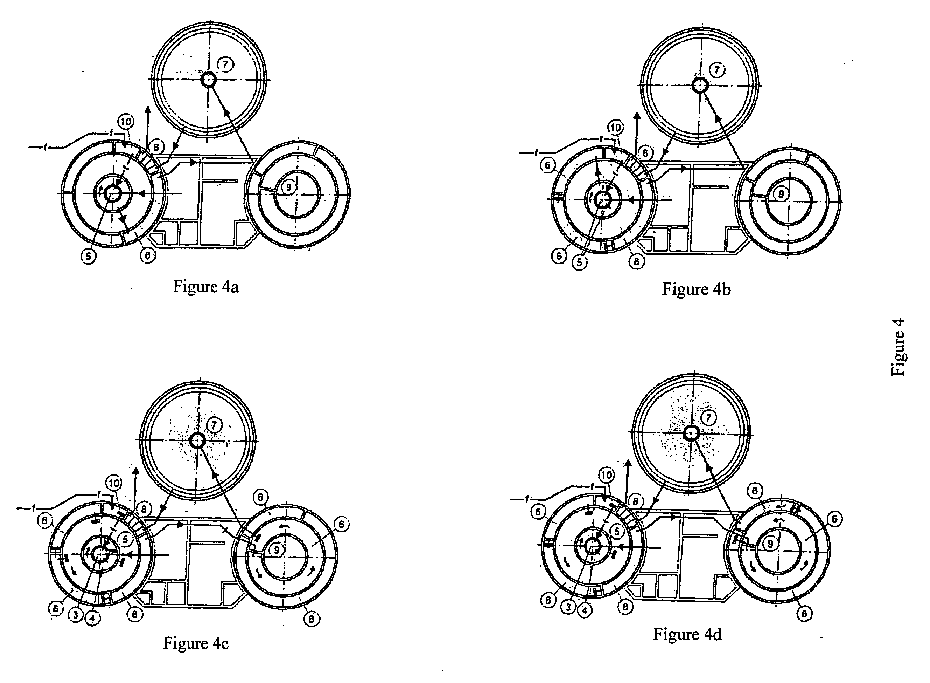

Figure 4 shows a schematic top view of the plant subassembly family installed in three large structures, where the first large structure has two circular rings, the sludge thickening unit 9 is installed in the central space surrounded by the inner circular ring, and the aerobic reactor 6 is installed in the inner and outer circular rings. The second large structure has three circular rings, the selector reactor 3 is installed in the central space surrounded by the inner circular ring, the anaerobic reactor 4 is installed in the inner circular ring, the anoxic reactor 5 is installed in the central circular ring, while the aerobic reactor 6, the sterilization unit 8 and the l.m.w. pre-treatment unit 10 are installed in the outer circular ring divided by dividing walls 2.

In the large structures shown in Figures 2, 3 and 4 the functions of the individual subassembly elements within the circular rings are interchangeable. The post-sedimentation unit 7, which is installed separately in a large structure, or in the central space of a large structure, is an exception. The post-sedimentation units 7 can be operated at different depths.

When designing a given plant, only the construction of the subassembly connecting elements - fittings, simple pipe elements, pipes, etc. - necessary for the operation of the actually required capacity steps have to be envisaged. Any of the reactors installed in the plant subassembly elements, or e.g. two of them jointly, can be operated both as an anaerobic or an anoxic reactor - if the recirculating systems are implemented accordingly. The aerobic reactor 6, which can be characterized as a tubular reactor, can be divided into any number of subreactors connected in series.

Figures 1-4 do not show the recirculating systems, from which e.g. the sludge recirculating system is designed for a permanent location, while the sewage recirculating system for simple relocation. Even in plants operating in multiple capacity steps, there are several technical solutions for the implementation of the recirculating systems, e.g. with - 1 or 2 - sludge recirculating pumps equipped with a frequency regulator, or with a system comprising more recirculating pumps, from which at low capacity steps only 1-2 simply relocatable machines operate.

The additional large structures drawn with a dashed line in Figures 1-4 illustrate the potentials for capacity expansion. In the event of the construction of a plant in two or more phases, the new large structures are built between the existing ones, connected to them is series. This ensures that a complex facility, even if constructed in multiple phases, operates as one technological line.

Figures 1a-1d, 2a-2d, 3a-3d and 4a-4d illustrate the operating potentials of the embodiments shown in Figures 1-4 with 4 capacity steps and in the same relative capacity range:

$$Q^{max.}_{l.m.w.};\ 0.2\,Q^{max.}_{sw.} + Q_{l.m.w.};\ 0.4\,Q^{max.}_{sw.} + Q_{l.m.w.};\ Q^{max.}_{sw.} + Q^{min.}_{l.m.w.}$$

where

$Q_{l.m.w.}$ = the daily quantity of liquid municipal waste characteristic of the given period
$Q^{max.}_{sw.}$ = the max. daily quantity of sewage

The calculation for the plant subassemblies shown in Figures 1-4 is the technological calculation outlined above with the $x^*$ ratios, - on the basis of which the sizing of the plant has been performed for each capacity step separately.

If the quantity of liquid municipal waste decreases below e.g. 0.025 Q (max sw.), the l.m.w. pre-treatment unit 10 becomes a part of the aerobic reactor 6. This is capacity step V.

Each of the plant subassemblies shown in Figures 1a-1d, 2a-2d, 3a-3d and 4a-4d applies two principle treatment technologies: in the first two capacity steps an anoxic + aerobic combination, while in the third and fourth capacity steps an anaerobic + anoxic + aerobic combination of activated sludge biological treatment is implemented.

The application of the biological sewage treatment plant subassembly family according to the invention in sewage treatment works provides special advantages:

- the sewage treatment works, due to the plant subassemblies, can be operated in multiple capacity steps even in the event of single-phase construction, in such a way that it operates in any capacity step with one technological line - even if constructed in multiple phases - and not as two or more plants operating in parallel, or partly in parallel;

- at such sewage treatment works, in addition to the above, the plant subassemblies - containing the volume-intensive biological treatment and related elements of the plant - together with their connecting elements, as well as their post-sedimentation unit operating at different depths, as required, and their recirculating systems adaptable to the requirements, allow the implementation of different types of treatment technologies;

- the sewage treatment works can be operated in a wide capacity range, from 500 LE to 100,000 LE;

## Claims

1. A highly flexible biological sewage treatment plant subassembly family, comprising subassembly elements installed in one or more large structure(s) having a circular ground plan or two opposite curved walls (1); the subassembly elements house the main, volume-intensive biological treatment and other units of the biological sewage treatment plant: the selector reactor (3), the anaerobic reactor (4), the anoxic reactor (5), the aerobic reactor (6), the post-sedimentation (7), the sterilization (8), the sludge thickening (9) and the liquid municipal waste pre-treatment (10) units, as well as the recirculating system(s), wherein in the inner space of at least one large structure there is at least one circular ring, and at least one circular ring is divided by dividing walls (2); the subassembly elements are installed in the circular ring and in the central space surrounded by the circular ring, and the large structures and the subassembly elements are connected in series with the commonly used fittings, and thus they form one technological line, irrespectively of the operating subassemblies and the number of large structures.

2. The plant subassembly family according to claim 1, wherein its capacity is in the range of 500 - 100 000 LE.

3. The plant subassembly family according to claim 1 or 2, wherein the position of the dividing walls (2) is changeable, depending on the demands.

4. The plant subassembly family according to claims 1-3, wherein the functions of the subassembly elements installed in the circular rings are interchangeable.

5. The plant subassembly family according to any of claims 1-4 installed in one large structure, wherein the large structure has one circular ring, the post-sedimentation unit (7) is installed in the central space surrounded by the circular ring, and the other subassembly elements are installed in the circular ring.

6. The plant subassembly family according to any of claims 1-4 installed in one large structure, wherein the large structure has two circular rings, the post-sedimentation unit (7) is installed in the central space surrounded by the circular rings, the anoxic reactor (5) is installed in the inner circular ring, and the other subassembly elements are installed in the outer circular ring.

7. The plant subassembly family according to any of claims 1-4 installed in two large structures, wherein one of the large structures has one circular ring, the post-sedimentation unit (7) is installed in the central space surrounded by the circular ring, and the aerobic reactor (6), the sterilization unit (8) and the sludge thickening unit (9) are installed in the circular ring, the other large structure has 3 circular rings, the anoxic reactor (5) or the selector reactor (3) is installed in the central space surrounded by the circular rings, the anoxic reactor (5) or the anaerobic reactor (4) is installed in the inner circular ring, the anoxic reactor (5) is installed in the central circular ring, and the aerobic reactor (6) and the l.m.w. pre-treatment unit (10) are installed in the outer circular ring.

8. The plant subassembly family according to any of claims 1-4 installed in three large structures, wherein the first large structure has two circular rings, the sludge thickening unit (9) is installed in the central space surrounded by the circular rings, and the aerobic reactor (6) is installed in the inner and outer circular rings, the second large structure has three circular rings, the selector reactor (3) or the anoxic reactor (5) is installed in the central space surrounded by the circular rings, the anaerobic reactor (4) is installed in the inner circular ring, the anoxic reactor (5) is installed in the central circular ring, and the aerobic reactor (6), the sterilization unit (8) and the l.m.w. pre-treatment unit (10) are installed in the outer circular ring, while the post-sedimentation unit (7) is installed in the third large structure.

Figure 1

Figure 2

Figure 3c

Figure 3a

Figure 3d

Figure 3b

Figure 3

Figure 4c

Figure 4a

Figure 4d

Figure 4b

Figure 4

**Europäisches Patentamt**
**European Patent Office**
**Office européen des brevets**

# EUROPEAN SEARCH REPORT

**Application Number**

EP 09 00 9411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 458 760 A (FOSFLEX S R L [IT]) 27 November 1991 (1991-11-27) | 1,4 | INV. C02F3/12 |
| Y | * column 2, lines 13-28; figures * <br> * column 4, line 18 - column 6, line 53 * | 2,3,5-8 | C02F3/30 |
| | ----- | | ADD. |
| Y | EP 1 114 797 A (SIRIUS B V [NL]; WATERSCHAP GROOT SALLAND [NL]) 11 July 2001 (2001-07-11) | 1,4 | C02F9/00 C02F11/12 C02F1/52 |
| Y | * paragraphs [0035], [0039], [0040], [0049], [0050], [0059]; claims; figures 1,2 * | 2,3,5-8 | C02F103/00 |
| | ----- | | |
| Y | US 3 312 346 A (DONALD WALKER JAMES) 4 April 1967 (1967-04-04) * column 1, lines 40-64; figure 1 * * column 2, line 57 - column 3, line 34 * * column 4, lines 66-73 * | 1,4,5 | |
| | ----- | | |
| Y | CN 1 990 393 A (BEIJING URBAN SEWERAGE GROUP C [CN] INT EPODOC Caesar accession number) 4 July 2007 (2007-07-04) * abstract * | 1-6 | |
| | ----- | | TECHNICAL FIELDS SEARCHED (IPC) |
| Y | JP 2001 038386 A (KAWASAKI CITY; NIPPON KOKAN KK) 13 February 2001 (2001-02-13) * abstract * | 1-6 | C02F |
| | ----- | | |
| Y | KR 2006 0088008 A (DONG MYEONG ENGINEERING CONSUL [KR]) 3 August 2006 (2006-08-03) * abstract * | 1-6 | |
| | ----- | | |
| D,Y | DE 39 19 368 A1 (OMS KLAERANLAGEN GMBH [DE]) 20 December 1990 (1990-12-20) * column 3, lines 39-45; claims; figure 5 * | 7,8 | |
| | ----- | | |
| A | US 6 207 054 B1 (THOLANDER BENT [DK]) 27 March 2001 (2001-03-27) * the whole document * | 1-8 | |
| | ----- | | |

The present search report has been drawn up for all claims

| Place of search | Date of completion of the search | Examiner |
|---|---|---|
| Munich | 23 September 2009 | Kurtulan Dogan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 00 9411

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2009

| Patent document cited in search report | | Publication date | Patent family member(s) | | Publication date |
|---|---|---|---|---|---|
| EP 0458760 | A | 27-11-1991 | IT | 1240837 B | 17-12-1993 |
| EP 1114797 | A | 11-07-2001 | NONE | | |
| US 3312346 | A | 04-04-1967 | NONE | | |
| CN 1990393 | A | 04-07-2007 | NONE | | |
| JP 2001038386 | A | 13-02-2001 | NONE | | |
| KR 20060088008 | A | 03-08-2006 | NONE | | |
| DE 3919368 | A1 | 20-12-1990 | NONE | | |
| US 6207054 | B1 | 27-03-2001 | AT | 201188 T | 15-06-2001 |
| | | | AU | 3336097 A | 02-02-1998 |
| | | | DE | 69704865 D1 | 21-06-2001 |
| | | | DE | 69704865 T2 | 28-03-2002 |
| | | | DK | 73196 A | 04-01-1998 |
| | | | WO | 9801396 A1 | 15-01-1998 |
| | | | EP | 0912449 A1 | 06-05-1999 |
| | | | ZA | 9705945 A | 02-02-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO P8504998 A
- WO P9803213 A
- GB 2164641 A
- DE 3919368
- DE 4207077
- DE 4444335
- HU 208656